# EUROPÄISCHE PATENTSCHRIFT

(11) **EP 1 213 427 B1**
(45) Veröffentlichungstag und Bekanntmachung des Hinweises auf die Patenterteilung: **11.08.2010**
(21) Anmeldenummer: 01125799.5
(22) Anmeldetag: 29.10.2001
(51) Int. Cl.: E05D 5/08

(54) **Dübelartiges Befestigungselement**
Dowel-like fastener
Elément de fixation à cheville

(30) Priorität: 08.12.2000 DE 20020884 U
(43) Veröffentlichungstag der Anmeldung: 12.06.2002
(73) Patentinhaber: Arturo Salice S.p.A., I-22060 Novedrate (Como) (IT)
(72) Erfinder: Salice, Luciano, 22060 Carimate (IT)
(74) Vertreter: Gossel, Hans K.

(56) Entgegenhaltungen:
- AT-B- 330 019
- DE-A1- 2 546 526
- DE-U1- 29 922 942
- GB-A- 2 027 482

## Beschreibung

Die Erfindung betrifft ein Montageteil mit einem dübelartigen Befestigungselement zur Befestigung in einer Bohrung , vorzugsweise für ein Möbelbeschlagteil, wobei das Befestigungselement zwei Spreizkörper aufweist, die im zusammengefahrenen Zustand in die Bohrung einsetzbar und durch ein von einem an dem Montageteil angelenkten Hebel bewegtes Teil spreizbar sind.

Aus DE 29 05 378 A1 sind dübelartige Befestigungselemente dieser Art bekannt, die aus mit einer zentralen Bohrung versehenen geschlitzten Spreizzapfen bestehen, die an einem flanschförmigen Teil eines topfförmigen Scharniergehäuses befestigt sind und nach Einsetzen des Scharniergehäuses und der Zapfen in vorgebohrte Löcher dadurch gespreizt werden, daß an einem an dem Scharniergehäuse angelenkten Schwenkbügel befestigte Stifte in die Bohrungen der Zapfen greifen, die sich zum Ende der Zapfen hin verengen. Da die Zapfen entsprechend dem Schwenkradius des Bügels auf einer Kurvenbahn in die Bohrungen der Zapfen eingreifen, müssen die Bohrungen verhältnismäßig groß ausgeführt werden, so daß sich nur eine begrenzte Spreizung der durch einen Schlitz getrennten Teile des Zapfens erreichen läßt.

Aus dem DE-GM 295 06 600.8 ist ein Befestigungselement der eingangs angegebenen Art bekannt, das aus einem zylindrischen Körper besteht, der mit einem radialen Durchbruch versehen ist, in dem zwei Spreizkörper über die zylindrische Hüllkontur des Körpers hinaus gegensinnig ausfahrbar und in deren Bereich einziehbar geführt sind, wobei die Spreizkörper mit schräg verlaufenden Langlöchern versehen sind, die ein in axialen Schlitzen des Körpers geführter Bolzen durchsetzt, der von einem Schwenkhebel bewegt wird, der an einem die zylindrischen Körper tragenden plattenförmigen Teil angelenkt ist. Dieses bekannte Befestigungselement weist einen verhältnismäßig komplizierten Aufbau auf, der einen erhöhten Fertigungsaufwand bedingt.

Aus der GB 2 027 4823 A ist ein Montageteil bekannt, das ein einziges zylinderförmiges Befestigungselement aufweist. Weiterhin weist das Befestigungselement zwei auf gegenüberliegenden Seiten der Seitenwand axial verlaufende Schlitze auf, in die jeweils ein Spreizkörper eines am Montageteil befestigten Hebels einführbar ist, wodurch ein Seitenabschnitt des Befestigungselements abgespreizt wird.

Aus der DE 299 22 942 U1 ist ebenfalls eine Montageplatte zur Befestigung eines Scharniers an einem Möbelteil dargestellt. Diese besteht aus einer Grundplatte, aus der unten ein Dübelpaar mit radialer Spreizung zur Befestigung am Möbelteil herausragt. Durch den an der Monteplatte befestigten U-förmigen Hebel können Spreizelemente in je einen Dübel des Dübelpaares eingeführt werden und diesen in eine Spreizstellung bewegen. Dabei weist das Spreizelement ein Profil mit einer Nockenfläche auf, die sich auf einer entsprechenden Nockenfläche im Dübelinneren bewegt.

Aufgabe der Erfindung ist es daher, ein einfacher herstellbares Montageteil der eingangs angegebenen Art zu schaffen, das sich nur durch Betätigung des Hebels sicher in einer vorgebohrten Bohrung verankern läßt.

Erfindungsgemäß wird diese Aufgabe dadurch gelöst, daß die Spreizkörper durch einen axialen Schlitz getrennte Hälten eines Zapfens sind, die an ihrem oberen Endbereich schwenkbar mit dem Montageteil verbunden sind, und daß das bewegte Teil ein in den Schlitz eindrückbares flaches Spreizteil ist. Das Befestigungselement besteht aus zwei gelenkig mit einem Montageteil verbundenen Spreizkörpern, die nach ihrem Einsetzen in ein vorgebohrtes Loch einfach und mit guter Verankerungswirkung durch Eindrücken eines flaches Spreizteils in den die Spreizkörper trennenden Schlitz gespreizt werden. Außerdem läßt sich das Befestigungselement auch bei Bohrungen sehr kleinen Durchmessers einsetzen.

Die Hälften der Spreizkörper können etwa halbkreisförmige, rechteckige, trapezförmige oder andere zweckmäßige Querschnitte besitzen.

Zweckmäßigerweise ist das Spreizteil ein plattenförmiger Körper.

Das Spreizteil kann unbeweglich mit dem an dem Montagekörper angelenkten Hebel verbunden sein.

Um ein gutes und möglichst großflächiges Eintauchen des Spreizteils in den Schlitz zwischen den Spreizkörpern zu erreichen, kann das Spreizteil auf seiner der Schwenkachse des Hebels abgewandten Seite mit einer zu der Schwenkachse etwa konzentrischen Krümmung versehen sein. Diese Ausgestaltung stellt sicher, daß das Spreizteil in den Schlitz zwischen den Spreizkörpern eintaucht, ohne den Schlitz zu verlassen.

Zweckmäßigerweise ist das Spreizteil an seinem äußeren Ende mit einem nasenförmigen Fortsatz versehen, der mit einem Anschlag an dem Montageteil zusammenwirkt. Diese Ausgestaltung stellt sicher, daß das Spreizteil mit seinem äußeren Ende im ausgeschwenkten Zustand des Hebels bereits in den Schlitz eingreift, ohne daß es durch Überdrücken des Hebels aus diesem entfernt werden kann. Dadurch ist in einfacher Weise die anfängliche Montagestellung des Befestigungselements gesichert.

Nach einer anderen Ausführungsform der Erfindung ist vorgesehen, daß das Spreizteil pendelnd an dem Hebel angelenkt ist. Diese Art der Anlenkung des Spreizteils stellt sicher, daß dieses etwa zentrisch in den die Spreizkörper trennenden Schlitz eingefahren werden kann.

Zweckmäßigerweise besteht das Montageteil aus einer Platte. Das Montageteil ist vorzugsweise ein Befestigungsplatte, die mit zwei Befestigungselementen versehen ist. Das Montageteil kann ein mit einem Befestigungsflansch versehener Scharniertopf eines Doppellenkerscharniers sein. Die Spreizteile können an einer schwenkbar mit einem Befestigungsflansch verbundenen Deckplatte angeordnet sein, die den Schwenkhebel bildet.

Um eine gute Spreizung der Spreizkörper zu gewährleisten, ist in weiterer Ausgestaltung der Erfindung vorgesehen, daß der die Spreizkörper trennende Schlitz an seinem oberen Ende eine dem Spreizteil entsprechende Breite aufweist und über einen keilförmigen Abschnitt in einen Endabschnitt übergeht, in dem die Spreizkörper im ungespreizten Zustand aneinanderliegen.

Die Spreizkörper können über eine etwa halbkreisförmige Nut an ihrem oberen Endbereich in den Rand einer Bohrung des Montageteils oder des plattenförmigen Körpers eingehängt sein. In dieser montierten Stellung verhindert das in den Schlitz zwischen den Spreizkörpern greifende -Spreizteil, daß die Spreizkörper mit ihren Nuten außer Eingriff mit dem Rand der Bohrung geraten.

Die Spreizkörper können aus Kunststoff, vorzugsweise aber aus Metall, beispielsweise Zinkdruckguß, bestehen. Um eine gute Verankerung an der Wandung der Bohrung sicherzustellen, sind die Spreizkörper vorzugsweise an ihrem äußeren Umfang mit radialen sägezahnförmigen Rippen versehen.

Der Hebel bzw. das Montageteil weisen vorzugsweise einen Anschlag auf, der die Verschwenkung des Hebels derart begrenzt, daß das Spreizteil das Montageteil nicht verlassen kann. So wird ein Überdrücken des Hebels verhindert. Das Spreizteil bleibt immer mit dem Befestigungselement in Verbindung, so daß das Spreizteil in keinem Fall zuerst in die Bohrung eingeführt werden müßte, bevor die Spreizung durchgeführt werden kann.

Ein Ausführungsbeispiel der Erfindung wird nachstehend anhand der Zeichnung näher erläutert. In dieser zeigt
- Fig. 1: eine Seitenansicht eines zwei gemäß einer Ausführungsform gestaltete Befestigungselemente tragenden Scharniertopfes, und zwar auf der linken Seite in der Montagestellung und auf der rechten Seite in der montierten Stellung,
- Fig. 2: einen Schnitt durch den Flansch des Scharniertopfs längs der Linie II-II in Fig. 1,
- Fig. 3: einen Schnitt durch den Flansch des Scharniertopfs längs der Linie III-III in Fig. 1,
- Fig. 4: eine Draufsicht auf den Scharniertopf nach Fig. 1 ohne Deckplatte und Befestigungselemente,
- Fig. 5: eine Draufsicht auf eine Hälfte eines Spreizkörpers des Befestigungselements,
- Fig. 6: eine Seitenansicht eines Befestigungselements,
- Fig. 7: eine Unteransicht der Deckplatte, teilweise geschnitten,
- Fig. 8: eine Seitenansicht eines Scharniertopfs mit einer zweiten Ausführungsform einer Spreizeinrichtung, teilweise im Schnitt,
- Fig. 9: den Scharniertopf nach Fig. 8 in der gespreizten Stellung seines Befestigungselements,
- Fig. 10: eine Unteransicht der Deckplatte des Scharniertopfs nach den Fig. 8 und 9,
- Fig. 11: einen Schnitt durch die Deckplatte längs der Linie XI-XI in Fig. 10,
- Fig. 12: eine Seitenansicht einer Befestigungsplatte, die durch zwei gemäß einer weiteren Ausführungsform gestaltete Befestigungselemente montiert werden kann,
- Fig. 13: einen Schnitt durch die Befestigungsplatte längs der Li- nie XIII-XIII in Fig. 12,
- Fig. 14: einen Schnitt durch die Befestigungsplatte längs der Li- nie XIV-XIV in Fig. 12,
- Fig. 15: eine Seitenansicht eines Spreizkörpers des Befesti- gungselements nach Fig. 12 und
- Fig. 16: eine Unteransicht einer Deckplatte nach Fig. 12.

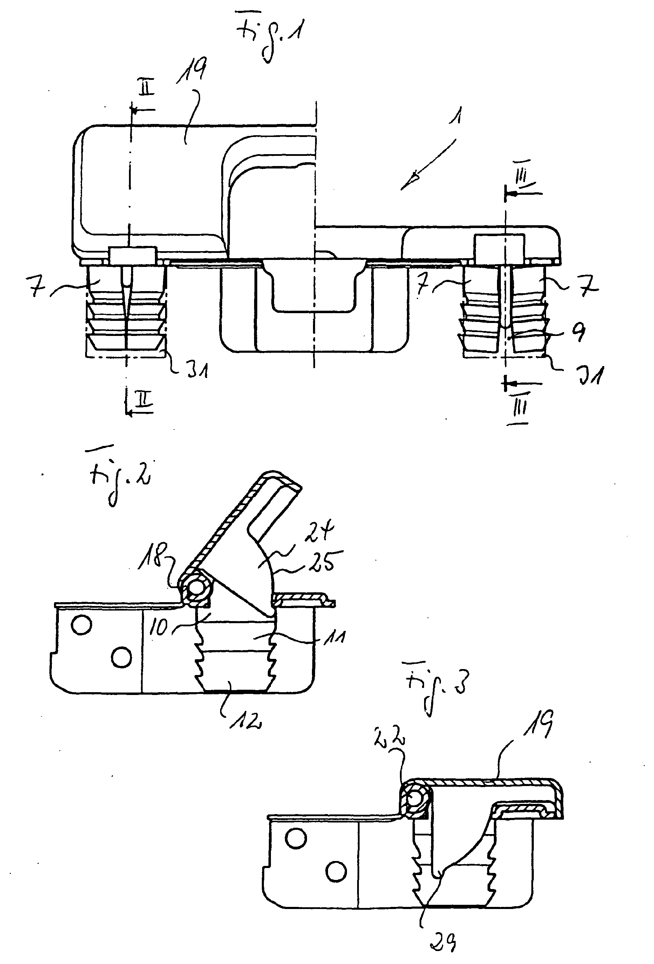

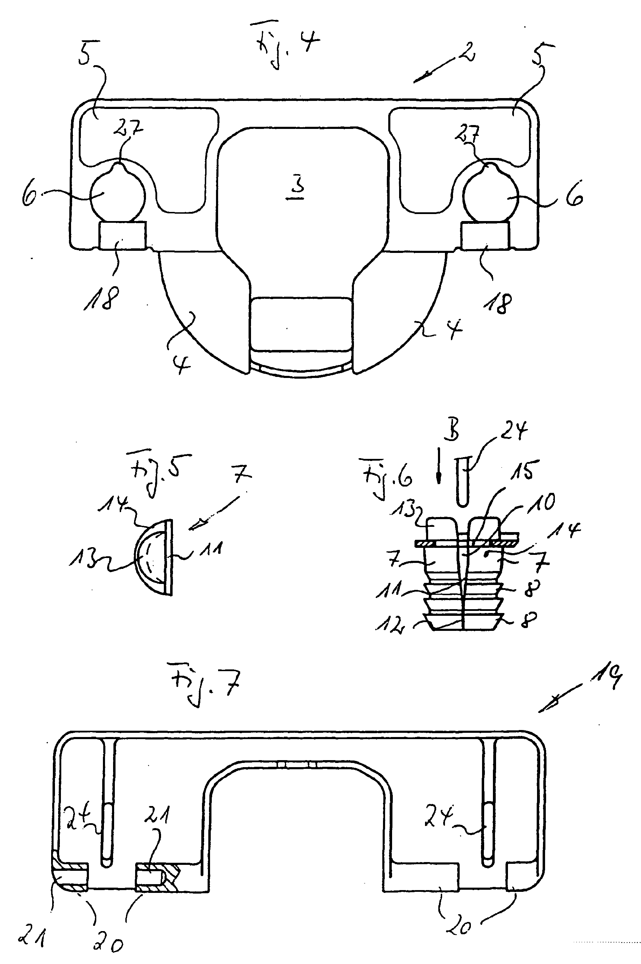

Aus den Fig. 1 bis 4 ist ein topfförmiges Scharnierteil 1 eines üblichen Doppellenkerscharniers ersichtlich. Der in Fig. 4 dargestellte Grundkörper 2 des topfförmigen Scharnierteils besteht aus einem Blechstanzteil. Der Rand des mittleren Topfes 3 ist an der Gelenkseite mit zwei etwa sektorförmigen Flanschteilen 4 versehen, an die sich etwa rechteckige Flanschteile 5 anschließen, die mit Ausstanzungen 6 versehen sind, die der Halterung der Spreizkörper 7 dienen. 31 deutet eine vorgebohrte Bohrung zur Befestigung an. Diese vorgebohrte Bohrung muß bei Einsatz eines Befestigungsteils entsprechend einer bevorzugten Ausführung in manchen Fällen z.B. nicht größer als 5 mm (Durchmesser) sein.

Bei dem Ausführungsbeispiel nach den Fig. 1 bis 10 bestehen die Spreizkörper 7 aus längs einer Durchmesserlinie mittig geteilten zylindrischen Zapfen. Die Hälften der einzeinen Spreizkörper 7 weisen somit einen etwa halbkreisförmigen Querschnitt auf. Sie sind auf ihren Mantelflächen mit ringförmigen radialen Rippen 8 versehen, die einen sägezahnförmigen Querschnitt aufweisen. Der Spreizkörper 7 trennende Schlitz 9 weist in dem aus Fig. 6 zusammengefahrenen Zustand der Spreizkörper 7 einen oberen breiteren Abschnitt 10 auf, an den sich ein mittlerer keilförmig zusammenlaufender Abschnitt 11 anschließt, der in einen unteren Abschnitt 12 mündet, in dem die Spreizkörper 7 aneinanderliegen. Die Spreizkörper 7 weisen an ihren oberen Enden Umfangsabschnitte 13 mit einem Radius auf, der kleiner ist als der Radius des darunterliegenden halbzapfenförmigen Teils 14. Zwischen den Abschnitten 13 und 14 weisen die Hälften der Spreizkörper 7 etwa halbkreisförmige Ringnuten 15 auf. Der Radius der oberen Abschnitte 13 der Spreizkörper 7 sind geringfügig kleiner als der Radius der Bohrungen 6 im Grundkörper 2 des Scharniertopfs 1. Auf diese Weise lassen sich die Spreizkörper 7 in der aus den Fig. 1 und 6 ersichtlichen Weise in den Rand der Bohrungen 6 des Grundkörpers 2 einhängen.

Die rechteckigen flanschförmigen Teile 5 sind an ihren der Anlenkseite des Scharniertopf zugewandten Seiten mit eingerollten Lageraugen 18 versehen. In diesen Lageraugen ist eine Deckplatte 19 schwenkbar gelagert. Diese Deckplatte, die aus Blech oder einem Zinkdruckgußteil bestehen kann, entspricht der Form des Flansches 5 und ist ihrem mittleren Bereich mit einer die Öffnung des Topfes 3 einfassenden Einsparung versehen. Die Deckplatte 19 weist an den unteren Rändern ihrer schenkelförmigen Seitenteile verdickte Ränder 20 auf, die mit einer Aussparung zur Einfassung der Lageraugen 18 versehen sind. Die verdickten Ränder sind mit Bohrungen 21 versehen, so daß zur Anlenkung der Deckplatte 19 an den Grundkörper 2 durch die fluchtenden Bohrungen 21 und den von diesen eingeschlossenen Bohrungen der Lageraugen 18 Gelenkzapfen 22 eingedrückt werden können. Auf der Unterseite der Deckplatte 19 sind rechtwinkelig von dieser abstehend eine Platte 24 einstückig angesetzt, die in Richtung des Pfeils B in Fig. 6 in den Schlitz 9 einfahrbar ist. Die Platte 24 weist einen äußeren Rand 25 auf, der konzentrisch zu der Schwenkachse 22 des Deckteils 19 gekrümmt ist. Dabei ist der Krümmungsradius derart auf den Rand der Bohrungen 6 mit den Flanschteilen 5 des Grundkörpers abgestimmt, daß der plattenförmige Spreizkörper 24 behinderungsfrei in den Spalt 9 eingefahren werden kann. Bei dem Ausführungsbeispiel nach den Fig. 1 bis 7 sind die Bohrungen 6 an ihren der Schwenkachse 22 gegenüberliegenden Seite mit Ausnehmungen 27 versehen, in denen die Ränder der bogenförmigen Abschnitte 25 der Spreizteile 24 geführt sind. Die Spreizteile 24 weisen angrenzend an den bogenförmigen Teil 25 verlängerte nasenförmige Vorsprünge 29 auf, die in der aus den Fig. 1 und 2 ersichtlichen Montagestellung an den Rand der Ausnehmungen 27 in der Weise anstoßen, daß ein weiteres Ausschwenken der Spreizteile 24 nicht möglich ist und somit die Endbereiche der Spreizteile 24 in dem Abschnitt 10 des Schlitzes zwischen den Spreizkörpern 7 gehalten sind. Dadurch ist sichergestellt, daß die Spreizkörper 7 mit dem Grund ihrer Ringnuten in Anlage an die Ränder der Bohrungen 6 gehalten sind, so daß diese aus den Bohrungen nicht herausfallen können.

Nach dem Einsetzen des Topfes 3 und der zusammengefahrenen Spreizkörper 7 in vorgebohrte Bohrungen 31 erfolgt die Verriegelung durch einfaches Herabdrücken der Deckplatte 19 in der aus Fig. 3 ersichtlichen Weise auf die Flanschteile 5 des Grundkörpers 2. Durch dieses Eindrücken überfahren die plattenförmigen Spreizteile 24 den keilförmigen Abschnitt 11 des Schlitzes 9 bis sie in den unteren Abschnitt 12 des Schlitzes eintreten. Dadurch werden die Spreizteile 7 in der aus Fig. 1 ersichtlichen Weise derart gespreizt, daß die sägezahnförmigen Rippen 8 in die Wandung der Befestigungsbohrungen 31 einschneiden.

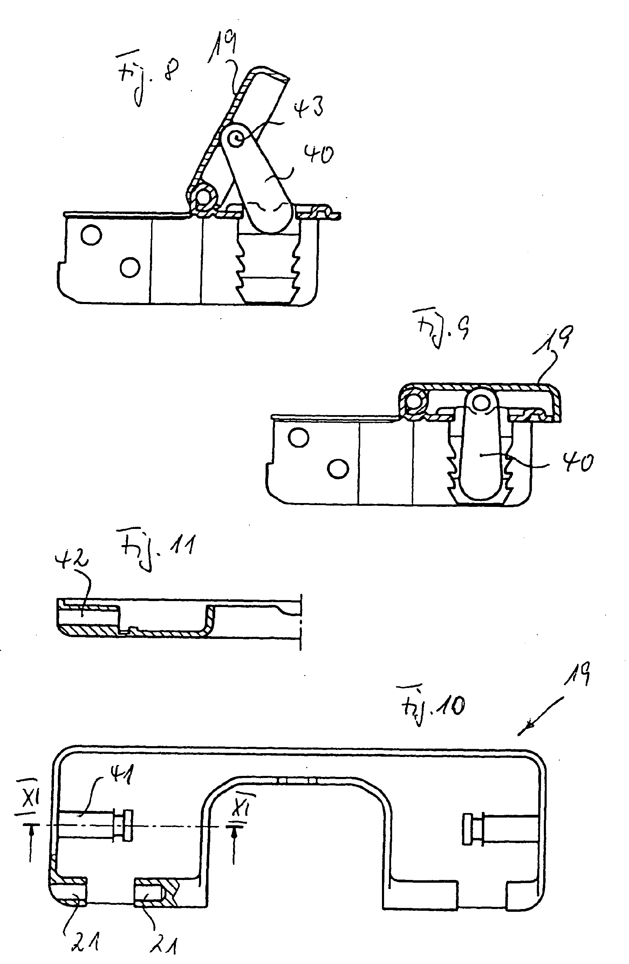

Bei dem Ausführungsbeispiel nach den Fig. 8 bis 10 ist das längliche Spreizteil 40 gelenkig mit der Deckplatte 19 verbunden. Zu diesem Zweck ist die Deckplatte 19 auf ihrer Unterseite parallel zu den Bohrungen 21 mit einer Verdickung 41 versehen, in die eine Bohrung 42 eingebracht ist. Durch einen in diese Bohrung 42 eingedrückten Lagerbolzen 43 ist das Spreizteil 40 pendelnd mit der Deckplatte 19 verbunden. Die Schwenkachse 43 ist an einer Stelle der Unterseite der Deckplatte 19 angebracht, die im eingedrückten Zustand des Spreizteils 40 etwa mittig über den Spreizkörpern 7 liegt.

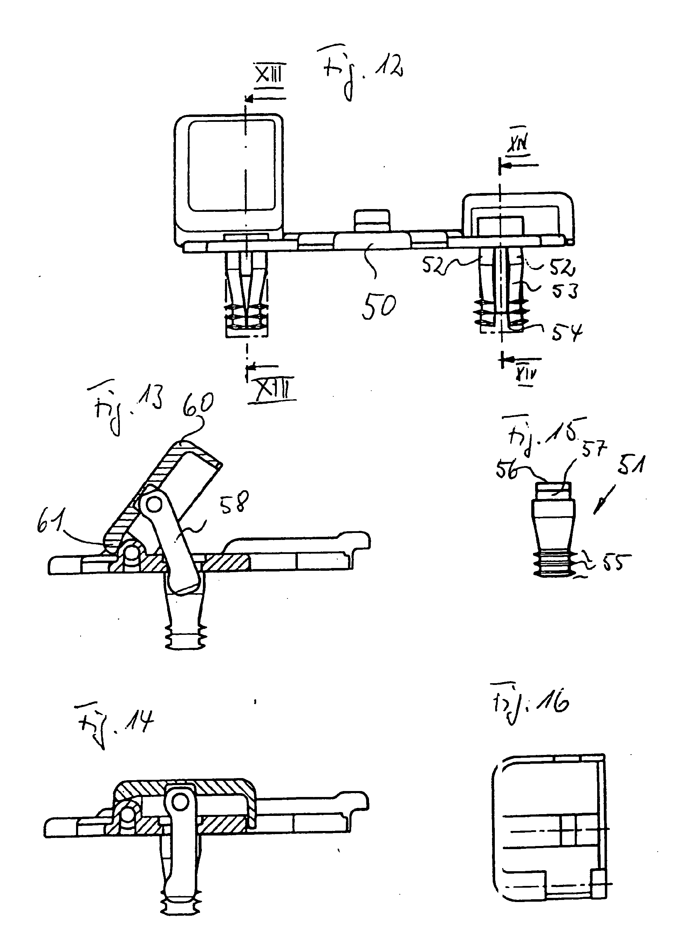

Bei dem Ausführungsbeispiel nach den Fig. 12 bis 16 dienen Befestigungselemente zur Montage einer Befestigungsplatte 50. Diese Befestigungsplatte 50 kann beispielsweise die Grundplatte zur Befestigung des Scharnierarms eines Gelenks sein.

Bei dem Ausführungsbeispiel nach Fig. 12 bestehen die Spreizkörper 51 aus im Querschnitt rechteckigen Teilen, die zweimal gegensinnig abgekröpft sind, so daß sich an obere Abschnitte 52, die im zusammengefahrenen Zustand der Spreizteile zwischen sich einen Spalt gleichen Durchmessers begrenzen, ein mittlerer Abschnitt 53 anschließt, in dem sich der Spalt zwischen den Spreizteilen keilförmig verengt. In dem Endabschnitt 54 liegen die Hälften der Spreizkörper 51 wiederum flach aufeinander. Um ein gutes Einschneiden der Spreizteile in die Bohrungswandungen zu gewährleisten, sind die unteren Abschnitte der Spreizkörper 51 mit verzahnten halbkreisförmigen Rippen 55 versehen.

An den oberen Abschnitt 52 der Spreizkörper schließt ein rechteckiger Fortsatz 56 geringerer Breite und Dicke über Stufen an, der mit einer Nut 57 versehen ist. Über diese Nuten 57 sind die Spreizkörper 51 an die Ränder der rechteckigen Durchbrüche der Befestigungsplatte 50 angehängt. In der aus Fig. 13 ersichtlichen Montagestellung sind die Spreizkörper 51 dadurch in den rechteckigen Durchbrüchen der Befestigungsplatte 50 gehalten, daß das pendelförmige Spreizteil 58 in den Spalt zwischen den Abschnitte 52 der Spreizkörper 51 greift, dessen Durchmesser der Dicke des Spreizteils 58 entspricht. Das Spreizteil 58 ist derart ausgebildet, daß es möglichst großflächig den Spalt zwischen den Spreizkörpern 51 beim Eindrücken durchfährt, jedoch nicht in die Wandungen der Bohrungen eingedrückt wird, die die Spreizkörper 51 aufnehmen.

Figur 13 zeigt weiterhin, daß die Deckplatte 60 einen Anschlag 61 aufweist, der mit dem ansteigenden Stegteil der Lageraugen 18 derart zusammenwirkt, daß die Ausschwenkbewegung des Deckels 60 begrenzt ist. Der Anschlag ist so ausgebildet, daß das Spreizteil 58 die Bohrung 6 in dem Grundkörper 2 nicht verlassen kann.

## Patentansprüche

1. Montageteil, vorzugsweise für ein Möbelbeschlagteil (1, 50), mit einem am Montageteil angelenkten Hebel (19,60) und einem von diesem Hebel (19,60) bewegten Teil, sowie mit einem dübelartigen Befestigungselement zur Befestigung des Montageteils in einer Bohrung (31), wobei das Befestigungselement zwei Spreizkörper (7,51) aufweist, die im zusammengefahrenen Zustand in die Bohrung (31) einsetzbar und durch das von dem an dem Montageteil angelenkten Hebel, bewegte Teil spreizbar sind,
**dadurch gekennzeichnet,**
**daß** die Spreizkörper (7, 51) jeweils aus längs einer Durchmesserlinie mittig geteilten zylindrischen Zapfen bestehen und durch einen axialen Schlitz (9) getrennte Hälften des Zapfens sind, die an ihrem oberen Endbereich schwenkbar mit dem Montageteil verbunden sind, und daß das bewegte Teil ein beim Spreizen von oben nach unten in den Schlitz (9) eindrückbares flaches Spreizteil (24, 40, 58) ist.

2. Montageteil nach Anspruch 1, **dadurch gekennzeichnet, daß** die Hälften der Spreizkörper (7,51) einen etwa halbkreisförmigen, rechteckigen oder trapezförmigen Querschnitt besitzen.

3. Montageteil nach Anspruch 1 oder 2, **dadurch gekennzeichnet, daß** das Spreizteil ein plattenförmiger Körper (24, 40, 58) ist.

4. Montageteil nach einem der Ansprüche 1 bis 3, **dadurch gekennzeichnet, daß** das Spreizteil (24) unbeweglich mit dem an dem Montageteil (1) angelenkten Hebel (19) verbunden ist.

5. Montageteil nach einem der Ansprüche 1 bis 4, **dadurch gekennzeichnet, daß** das Spreizteil (24) auf seiner der Schwenkachse (22) des Hebels (19) abgewandten Seite mit einer zu der Schwenkachse (22) etwa konzentrischen Krümmung (24) versehen ist.

6. Montageteil nach einem der Ansprüche 1 bis 5, **dadurch gekennzeichnet, daß** das Spreizteil (24) an seinem äußeren Ende mit einem nasenförmigen Fortsatz (29) versehen ist, der mit einem Anschlag an dem Montageteil (1) zusammenwirkt.

7. Montageteil nach Anspruch 1 oder 2, **dadurch gekennzeichnet, daß** das Spreizteil (40, 58) pendelnd an dem Hebel (19, 60) angelenkt ist.

8. Montageteil nach einem der Ansprüche 1 bis 7, **dadurch gekennzeichnet, daß** das Montageteil aus einer Platte besteht.

9. Montageteil nach einem der Ansprüche 1 bis 8, **dadurch gekennzeichnet, daß** das Montageteil eine Befestigungsplatte (50) ist, die mit zwei Befestigungselementen versehen ist.

10. Montageteil nach einem der Ansprüche 1 bis 9, **dadurch gekennzeichnet, daß** das Montageteil ein mit einem Befestigungsflansch (4, 5) versehener Scharniertopf (3) eines Doppellenkerscharniers ist.

11. Montageteil nach Anspruch 10, **dadurch gekennzeichnet, daß** die Spreizteile an einer schwenkbar mit dem Befestigungsflansch verbundenen Deckplatte angeordnet sind.

12. Montageteil nach einem der Ansprüche 1 bis 11, **dadurch gekennzeichnet, daß** der die Spreizkörper (7, 51) trennende Schlitz (9) an seinem oberen Ende eine dem Spreizteil (24, 40, 58) entsprechende Breite aufweist und über einen keilförmigen Abschnitt (11, 53) in einen Endabschnitt (12, 54) übergeht, in dem die Spreizkörper (7, 51) aneinanderliegen.

13. Montageteil nach einem der Ansprüche 1 bis 12, **dadurch gekennzeichnet, daß** die Spreizkörper (7, 51) über eine Nut an ihrem oberen Endbereich in den Rand einer Bohrung des Montageteils oder des plattenförmigen Körpers eingehängt sind.

14. Montageteil nach einem der Ansprüche 1 bis 13, **dadurch gekennzeichnet, daß** die Spreizkörper aus Metall, z. B. Zinkdruckguß, bestehen.

15. Montageteil nach einem der Ansprüche 1 bis 14, **dadurch gekennzeichnet, daß** der Hebel (19, 60) bzw. das Montageteil einen Anschlag (61) aufweist, der die Verschwenkung des Hebels (19, 60) derart begrenzt, daß das Spreizteil (24, 40, 58) die Verbindung zu dem Befestigungselement nicht verlieren kann.

## Claims

1. Mounting part, preferably for a furniture-fitting part (1, 50), having a lever (19, 60), which is articulated on the mounting part, having a part which is moved by this lever (19, 60), and having a dowel-like fastening element for fastening the mounting part in a bore (31), wherein the fastening element has two expansion bodies (7, 51) which, in the moved-together state, can be inserted into the bore (31) and can be expanded by the part moved by the lever articulated on the mounting part,
**characterized**
**in that** the expansion bodies (7, 51) each comprise cylindrical pegs which are divided centrally along a diameter line and are in the form of peg halves which are separated by an axial slot (9) and are connected to the mounting part in a pivotable manner at their top end region, and in that the moved part is a flat spreader part (24, 40, 58) pushed downwards into the slot (9) from the top during the expanding operation.

2. Mounting part according to Claim 1 **characterized in that** the halves of the expansion bodies (7, 51) have an approximately semicircular, rectangular or trapezoidal cross section.

3. Mounting part according to Claim 1 or 2, **characterized in that** the spreader part is a plate-like body (24, 40, 58).

4. Mounting part according to one of Claims 1 to 3, **characterized in that** the spreader part (24) is connected in a non-movable manner to the lever (19) articulated on the mounting part (1).

5. Mounting part according to one of Claims 1 to 4, **characterized in that** the spreader part (24) is provided, on its side which is directed away from the pivot pin (22) of the lever (19), with a curved portion (24) which is approximately concentric with the pivot pin (22).

6. Mounting part according to one of Claims 1 to 5, **characterized in that** the spreader part (24) is provided, at its outer end, with a nose-like extension (29) which interacts with a stop on the mounting part (1) .

7. Mounting part according to Claims 1 or 2, **characterized in that** the spreader part (40, 58) is articulated in pendulum fashion on the lever (19, 60).

8. Mounting part according to one of Claims 1 to 7, **characterized in that** the mounting part comprises a plate.

9. Mounting part according to one of Claims 1 to 8, **characterized in that** the mounting part is a fastening plate (50) which is provided with two fastening elements.

10. Mounting part according to one of Claims 1 to 9, **characterized in that** the mounting part is a hinge cup (3) which is provided with a fastening flange (4, 5) and belongs to a double-link hinge.

11. Mounting part according to Claim 10, **characterized in that** the spreader parts are arranged on a cover plate which is connected in a pivotable manner to the fastening flange.

12. Mounting part according to one of Claims 1 to 11, **characterized in that** the slot (9) which separates the expansion bodies (7, 51) has, at its top end, a width corresponding to the spreader part (24, 40, 58) and merges, via a wedge-shaped portion (11, 53), into an end portion (12, 54) in which the expansion bodies (7, 51) abut.

13. Mounting part according to one of Claims 1 to 12, **characterized in that** the expansion bodies (7, 51) are fitted, via a groove in their top end region, into the periphery of a bore in the mounting part or in the plate-like body.

14. Mounting part according to one of Claims 1 to 13, **characterized in that** the expansion bodies consist of metal, e.g. zinc diecasting.

15. Mounting part according to one of Claims 1 to 14, **characterized in that** the lever (19, 60) or the mounting part has a stop (61) which limits the pivoting of the lever (19, 60) such that the spreader part (24, 40, 58) cannot loose the connection to the fastening element.

## Revendications

1. Pièce de montage, de préférence pour une ferrure de meuble (1, 50), comportant un levier (19, 60), articulé contre la pièce de montage, et un élément mû par ledit levier (19, 60), et comportant un élément de fixation de type cheville pour la fixation de la pièce de montage dans une forure (31), ledit élément de fixation comportant deux corps expansibles (7, 51), qui dans la position rapprochée peuvent être insérés dans la forure (31) et qui peuvent être écartés par l'élément mû par le levier articulé contre la pièce de montage,
**caractérisée en ce que**
les corps expansibles (7, 51) sont formés chacun par un tenon cylindrique scindé au milieu le long d'une ligne diamétrale et sont des moitiés du tenon, qui sont séparées par une fente axiale (9) et qui, au niveau de leur zone d'extrémité supérieure, sont reliées de manière pivotante à la pièce de montage, et **en ce que** l'élément mobile est un élément écarteur (24, 40, 58) plat, destiné à être enfoncé du haut vers le bas dans la fente (9) au moment de l'écartement.

2. Pièce de montage selon la revendication 1, **caractérisée en ce que** les moitiés du corps expansible (7, 51) ont une section sensiblement semi-circulaire, rectangulaire ou trapézoïdale.

3. Pièce de montage selon la revendication 1 ou 2, **caractérisée en ce que** l'élément écarteur est un corps (24, 40, 58) en forme de plaquette.

4. Pièce de montage selon l'une quelconque des revendications 1 à 3, **caractérisée en ce que** l'élément écarteur (24) est relié de manière immobile au levier (19) articulé contre la pièce de montage (1).

5. Pièce de montage selon l'une quelconque des revendications 1 à 4, **caractérisée en ce que** l'élément écarteur (24), sur sa face opposée à l'axe de pivotement (22) du levier (19), est muni d'une courbure (24) sensiblement concentrique à l'axe de pivotement (22).

6. Pièce de montage selon l'une quelconque des revendications 1 à 5, **caractérisée en ce que** l'élément écarteur (24), au niveau de son extrémité extérieure, est muni d'une saillie (29) en forme de téton, qui coopère avec une butée sur la pièce de montage (1).

7. Pièce de montage selon la revendication 1 ou 2, **caractérisée en ce que** l'élément écarteur (40, 58) est articulé de manière oscillante contre le levier (19, 60).

8. Pièce de montage selon l'une quelconque des revendications 1 à 7, **caractérisée en ce que** la pièce de montage est réalisée dans une plaque.

9. Pièce de montage selon l'une quelconque des revendications 1 à 8, **caractérisée en ce que** la pièce de montage est une plaque de fixation (50), qui est munie de deux éléments de fixation.

10. Pièce de montage selon l'une quelconque des revendications 1 à 9, **caractérisée en ce que** la pièce de montage est un corps creux (3) d'une charnière à double bras, lequel est muni d'une bride de fixation (4, 5).

11. Pièce de montage selon la revendication 10, **caractérisée en ce que** les éléments écarteurs sont agencés sur une plaque de recouvrement assemblée de manière pivotante à la bride de fixation.

12. Pièce de montage selon l'une quelconque des revendications 1 à 11, **caractérisée en ce que** la fente (9), séparant les corps expansibles (7, 51), possède sur son extrémité supérieure une largeur correspondant à l'élément écarteur (24, 40, 58) et se prolonge à la suite d'un tronçon conique (11, 53) par un tronçon d'extrémité (12, 54), dans lequel les corps expansibles (7, 51) sont en appui l' un contre l'autre.

13. Pièce de montage selon l'une quelconque des revendications 1 à 12, **caractérisée en ce que** les corps expansibles (7, 51), par l'intermédiaire d'une rainure sur leur zone d'extrémité supérieure, sont accrochés dans le bord d'une forure de la pièce de montage ou du corps en forme de plaque.

14. Pièce de montage selon l'une quelconque des revendications 1 à 13, **caractérisée en ce que** les corps expansibles sont réalisés en métal, tels que des pièces coulées sous pression en zinc.

15. Pièce de montage selon l'une quelconque des revendications 1 à 14, **caractérisée en ce que** le levier (19, 60) ou la pièce de montage comportent une butée (61), qui limite le pivotement du levier (19, 60) de telle sorte que la liaison de l'élément écarteur (24, 40, 58) avec l'élément de fixation ne peut se désolidariser.
